# EUROPEAN PATENT APPLICATION

(11) **EP 3 886 027 A1**
(43) Date of publication of application: **29.09.2021**
(21) Application number: 20165769.9
(22) Date of filing: 26.03.2020
(51) Int. Cl.: G06Q 30/00, G06Q 30/02

(54) **ASSISTANCE SYSTEM USING INTERACTIONAL AWARENESS FOR A VEHICLE**

(71) Applicant: Bayerische Motoren Werke Aktiengesellschaft, 80809 München (DE)
(72) Inventor: Ries, Klaus, 85764 Oberschleissheim (DE); Vögel, Hans-Jörg, 82194 Gröbenzell (DE); Simões, Ricardo, 4150-307 Porto (PT)

(57) **Abstract**

The present disclosure relates to an assistance system for a vehicle. The assistance system includes one or more processors configured to receive data relating to gestures and/or sound of a passenger of the vehicle; analyze the data relating to the gestures and/or sound to determine whether an interaction of the passenger is directed towards the vehicle or another entity; and perform an interaction planning with the passenger based on the analysis.

## Description

### FIELD

Embodiments of the present disclosure relate to an assistance system for a vehicle, a vehicle having the assistance system, an assistance method for a vehicle, and a computer readable storage medium for executing the assistance method. The embodiments of the present disclosure particularly relate to an Intelligent Personal Assistant (IPA) capable of interacting with passengers of a vehicle based on interactional awareness.

### BACKGROUND

An intelligent personal assistant (IPA) is a software that can assist people with basic tasks, usually providing information using natural language. IP As may use online resources to answer a user's questions e.g. about the weather, sport scores, to provide driving directions and to answer other queries.

In recent years, Intelligent Personal Assistants for vehicles, such as in-car interactive multimodal personal assistants, and the use of proactive car reactions such as audio signals, voice prompts, climatization or entertainment offerings have become popular. However, the conventional Intelligent Personal Assistants may interpret a user's intention incorrectly and perform actions which are no desired by the user. For example, the Intelligent Personal Assistant may interpret a user's gesture as a gesture to turn up a volume of the entertainment system, although the user did not intend to give such an instruction by his gesture.

In view of the above, an assistance system for a vehicle, a vehicle having the assistance system, an assistance method for a vehicle, and a computer readable storage medium for executing the assistance method, that overcome at least some of the problems in the art are beneficial.

### SUMMARY

In light of the above, an assistance system for a vehicle, a vehicle having the assistance system, an assistance method for a vehicle, and a computer readable storage medium for executing the assistance method are provided.

It is an object of the present disclosure to provide a reliable recognition of a user's intention when executing an assistance function. Particularly, it is an object to provide a reliable and correct interaction planning.

The objects are solved by the features of the independent claims. Preferred embodiments are defined in the dependent claims.

According to an independent aspect of the present disclosure, an assistance system for a vehicle is provided. The assistance system includes one or more processors configured to receive data relating to gestures and/or sound of a passenger of the vehicle; analyze the data relating to the gestures and/or sound to determine whether an interaction of the passenger is directed towards the vehicle or another entity; and perform an interaction planning with the passenger based on the analysis.

The assistance system may include an interaction awareness component and an interaction planning component, which may be implemented by the one or more processors. The interaction awareness component may receive the data relating to gestures and/or sound of a passenger of the vehicle and analyze the data relating to the gestures and/or sound to determine whether an interaction of the passenger is directed towards the vehicle or another entity. The interaction planning component may perform the interaction planning with the passenger based on the analysis.

The gestures and/or sound of the passenger indicate or even define the interaction between the passenger and the vehicle or the other entity, such as another passenger of the vehicle.

According to some embodiments, which can be combined with other embodiments described herein, the interaction includes, or indicates, at least one of:
- participants and/or roles of the participants; and/or
- a kind of interaction and/or an intensity of the interaction; and/or
- a temporal extent of the interaction; and/or
- gestures.

According to some embodiments, which can be combined with other embodiments described herein, the other entity is selected from the group including, or consisting of, another passenger of the vehicle, a person outside the vehicle, and a mobile device.

The term "mobile device" includes in particular smartphones, but also other mobile telephones or cell phones, personal digital assistants (PDAs), tablet PCs, smart watches, smart glasses, portable gaming devices, laptops music players, data storage devices, or other handheld devices, etc.

According to some embodiments, which can be combined with other embodiments described herein, the one or more processors are configured to use multimodal dialogue processing and/or at least one detection algorithm to determine whether the interaction of the passenger is directed towards the vehicle or the other entity.

According to some embodiments, which can be combined with other embodiments described herein, the interactions are selected from the group including, or consisting of:
- chit chat and discussion; and/or
- storytelling; and/or
- information giving; and/or
- question answer games; and/or
- expressing an individual condition.

According to some embodiments, which can be combined with other embodiments described herein, the interaction of the passenger is classified according to a specific interaction catalogue.

According to some embodiments, which can be combined with other embodiments described herein, the one or more processors are configured to conduct a conversation with the passenger based on the interaction planning.

According to some embodiments, which can be combined with other embodiments described herein, the data received by the one or more processors are image data and/or acoustic data. The data may be provided by at least one sensor of the vehicle, such as a camera and/or a microphone.

According to some embodiments, which can be combined with other embodiments described herein, the assistance system is an Intelligent Personal Assistant (IPA).

According to some embodiments, which can be combined with other embodiments described herein, the assistance system is configured for monitoring, and in particular safety monitoring.

According to some embodiments, which can be combined with other embodiments described herein, the one or more processors are configured to perform a proactive interaction with the passenger. For example, the assistance system may talk first instead of merely reacting to the passenger talking.

According to another independent aspect of the present disclosure, a vehicle is provided. The vehicle includes the assistance system according to the embodiments of the present disclosure.

The term "vehicle" includes passenger cars, trucks, buses, campers, motorcycles, etc., which are used to transport people, goods, etc. In particular, the term includes motor vehicles for the transport of persons.

According to another independent aspect of the present disclosure, an assistance method for a vehicle is provided. The assistance method includes a receiving of data relating to gestures and/or sound of a passenger of the vehicle; an analyzing of the data relating to the gestures and/or sound to determine whether an interaction of the passenger is directed towards the vehicle or another entity; and a performing of an interaction planning with the passenger based on the analysis.

According to another independent aspect of the present disclosure, a computer readable storage medium is provided. The computer readable storage medium includes instructions which, when executed on one or more processors, cause the one or more processors to perform the assistance method of the present disclosure.

The term "computer readable storage medium" includes various types of non-transitory memory devices or storage devices. The term "storage medium" is intended to include a computer system memory or random access memory such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The storage medium may include other types of non-transitory memory as well or combinations thereof.

Further aspects, benefits, and features of the present disclosure are apparent from the claims, the description, and the accompanying drawings.

Embodiments are also directed at devices for carrying out the disclosed methods and include device parts for performing each described method aspect. These method aspects may be performed by way of hardware components, a computer programmed by appropriate software, by any combination of the two or in any other manner. Furthermore, embodiments according to the disclosure are also directed at methods for operating the described assistance system. It includes method aspects for carrying out every function of the assistance system.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- FIG. 1: shows a schematic view of an assistance system for a vehicle according to various embodiments described herein; and
- FIG. 2: shows a flow chart of an assistance method for a vehicle according to embodiments described herein.

### DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

In recent years, Intelligent Personal Assistants for vehicles, such as in-car interactive multimodal personal assistants, and the use of proactive car reactions such as audio signals, voice prompts, climatization or entertainment offerings have become popular. However, the conventional Intelligent Personal Assistants may interpret a user's intention incorrectly and perform actions which are no desired by the user. For example, the Intelligent Personal Assistant may interpret a user's gesture as a gesture to turn up a volume of the entertainment system, although the user did not intend to give such an instruction by his gesture.

The embodiments of the present disclosure overcome the above drawbacks by providing an interaction awareness component which understands the interactions of passengers with other passengers, other individuals outside of the vehicle or devices brought to the vehicle. The interaction awareness component may deliver contextualized information to an interaction planning component which organizes the interaction of the vehicle with its passengers. The interaction planning component can use this information to distinguish between interactions directed at the vehicle versus interactions directed at other people or devices. Additionally, interaction awareness may be used directly to influence the interaction planning.

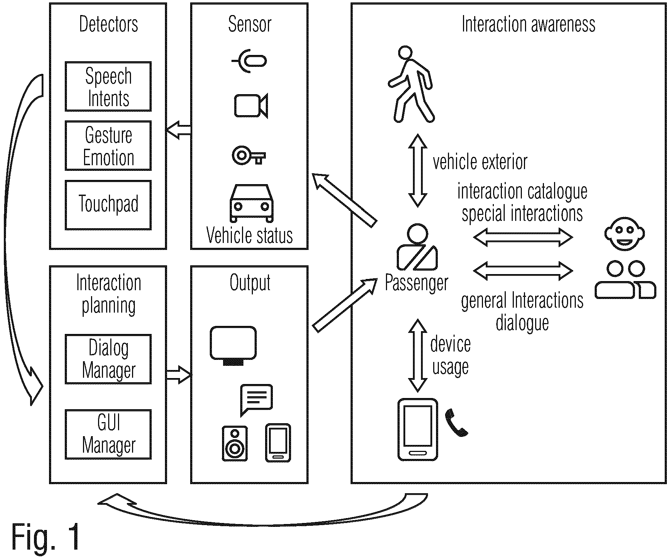

FIG. 1 shows a schematic view of an assistance system 100 according to embodiments described herein.

The assistance system 100 includes one or more processors configured to receive data relating to gestures and/or sound of anpassenger of the vehicle; analyze the data relating to the gestures and/or sound to determine whether an interaction of the passenger is directed towards the vehicle or another entity; and perform an interaction planning with the passenger based on the analysis.

In some embodiments, the assistance system 100 is an Intelligent Personal Assistant (IPA). The IPA assists people with basic tasks, such as providing information using natural language. The IPA may use online resources to interact with the passenger of the vehicle.

The assistance system 100 may include the interaction awareness component and the interaction planning component, which may be implemented by the one or more processors. The interaction awareness component may receive the data relating to gestures and/or sound of a passenger of the vehicle and analyze the data relating to the gestures and/or sound to determine whether an interaction of the passenger is directed towards the vehicle or another entity. The interaction planning component may perform the interaction planning with the passenger based on the analysis.

The interaction awareness component may abstracta high level information from sensors about interactions not directed at the vehicle. The interaction awareness component may use multimodal dialogue processing and/or specific detection algorithms and may store its results in a central data component such that the interaction planning component can access the information. The interaction planning component conducts a conversation with the passengers and may prompt them on screens, via voice or sounds.

In some embodiments, the interaction awareness component may use interaction awareness to:
- understand whether gestures (e.g. pointing, touching, speaking, looking, ...) are directed at the vehicle and not at other passengers or devices. Detection algorithms for ambiguous gestures can be improved if it is known that a gesture is directed at the vehicle or not; and/or
- determine whether passengers are ready to interact with the vehicle which may be used to prioritize proactive behavior; and/or
- interact appropriately given the interactional context, e.g. react to a crying infant, a conversation about pauses in the travel plan, interesting musicians, and/or other needs.

In the following, possible interactions are defined by way of specific examples. However, it is to be understood that the present disclosure is not limited thereto and that the interactions can be defined in any suitable way.

In more detail, in an exemplary embodiment, the result of the interaction awareness component may be a set of interactions in the vehicle and may include at least one of:
- the interaction partners and optionally their roles in the interaction; and/or
- a kind of interaction and optionally its level of intensity; and/or
- a temporal extent of the interaction; and/or
- the gestures (e.g. pointing, touching, speaking, looking, etc.) used in that interaction.

Generally, interactions are an externally observable behavior and can therefore be detected e.g. based on data provided by cameras and/or microphones. Technical methods for the detection of interactions are known and thus not explained in detail.

Further annotations of an interaction may be at least one of the following:
- displays of affect; and/or
- speech transcripts; and/or
- topic (e.g. in the form of topical keywords); and/or
- a welcome of interactions with the vehicle (in general or specific to the interaction)

Interactions between passengers may be at least one of the following general interactions:
- chit chat and discussion (evenly distributed information giving interaction); and/or
- storytelling (single sided information giving interaction); and/or
- information giving; and/or
- question answer games; and/or
- expressing an individual condition (e.g. dizziness).

The interaction catalogue may include specific interactions which are easier to detect than general interaction classifications. The interaction catalogue may also include interactions with infants, toddlers or devices which do not follow a standard interaction schema and therefore need to be detected using specific algorithms.

An exemplary preliminary (specific) interaction catalogue is listed below:
- a general but non intense babbling conversation with driver and her spouse, no other passenger; and/or
- same as a) but discussing points of interest (POI) along the way; and/or
- infant screams on the back seat; and/or
- toddler is bored and asks "How long is the drive? When do we get to granny?"; and/or
- a businessmen conducting a heated meeting on the phone; and/or
- two little acquainted colleagues making conversation; and/or
- a silent ride of three likely non-acquainted adults in a ride sharing vehicle; and/or
- multiple people smiling straight into the vehicle camera without driving; and/or
- playing a road game; and/or
- expressing the need for a break in driving.

Interactions may not only involve other passengers but also individuals outside of the vehicle, such as voice or video calls, a chat, and/or other individuals visible from the vehicle.

Interactions with smartphones, game consoles or other mobile devices are also possible. However, the interaction type may just be "using" with a different level of intensity.

The interaction data structure may also be used for non-interactional use cases such as the description of weather conditions (e.g. annotating a relationship between the vehicle and the weather).

By using the above interactions or classifications of interactions, the interaction planning component can be improved in regard to at least one of the following:
- predict whether proactive information giving is appreciated in general or should be delayed; and/or
- select specific content or actions by the vehicle given the specific situation (example: infant screaming will transmit a video of the infant on the front display and offer some quick remedies such as cooling, heating and next stops on a motorway); and/or

- identify speech and gestures as belonging to an interaction directed at the vehicle or other people or other devices; and/or
- mirror the interaction style of the person addressing the vehicle; and/or
- the interaction awareness component can be used to share rich information to robots in the vehicle; and/or
- index and retrieve recorded experiences (e.g. recall a conversation during a drive given an "interaction browser"); and/or
- decoupling of sensors from higher level components; and/or
- improving the architecture; and/or
- protecting privacy by aggregating sensor data; and/or
- monitoring; and/or
- safety (what are passengers paying attention to? Are passengers acting actively?); and/or
- parental control; and/or
- compliance with usage regulations.

FIG. 2 shows a flow chart of an assistance method 200 for a vehicle according to embodiments described herein.

The assistance method 200 includes in block 210 a receiving of data relating to gestures and/or sound of a passenger of the vehicle; in block 220 an analyzing of the data relating to the gestures and/or sound to determine whether an interaction of the passenger is directed towards the vehicle or another entity; and in block 230 a performing of an interaction planning with the passenger based on the analysis.

The embodiments of the present disclosure provide an interaction awareness component which understands the interactions of passengers with other passengers, other individuals outside of the vehicle or devices brought to the vehicle. The interaction awareness component may deliver contextualized information to an interaction planning component which organizes the interaction of the vehicle with its passengers. The interaction planning component can use this information to distinguish between interactions directed at the vehicle versus interactions directed at other people or devices. Additionally, interaction awareness may be used directly to influence the interaction planning.

While the foregoing is directed to embodiments of the disclosure, other and further embodiments of the disclosure may be devised without departing from the basic scope thereof, and the scope thereof is determined by the claims that follow.

## Claims

1. An assistance system (100) for a vehicle, comprising:
one or more processors configured to:
receive data relating to gestures and/or sound of a passenger of the vehicle;
analyze the data relating to the gestures and/or sound to determine whether an interaction of the passenger is directed towards the vehicle or another entity; and
perform an interaction planning with the passenger based on the analysis.

2. The assistance system (100) of claim 1, wherein the interaction includes, or indicates, at least one of:
participants and/or roles of the participants; and/or
a kind of interaction and/or an intensity of the interaction; and/or
a temporal extent of the interaction; and/or
gestures.

3. The assistance system (100) of claim 1 or 2, wherein the other entity is selected from the group consisting of another passenger of the vehicle, a person outside the vehicle, and a mobile device.

4. The assistance system (100) of any one of claims 1 to 3, wherein the one or more processors are configured to use multimodal dialogue processing and/or at least one detection algorithm to determine whether the interaction of the passenger is directed towards the vehicle or the other entity.

5. The assistance system (100) of any one of claims 1 to 4, wherein the interactions are selected from the group consisting of:
chit chat and/or discussion; and/or
storytelling; and/or
information giving; and/or
question answer games; and/or
expressing an individual condition.

6. The assistance system (100) of any one of claims 1 to 5, wherein the interaction of the passenger is classified according to a specific interaction catalogue.

7. The assistance system (100) of any one of claims 1 to 6, wherein the one or more processors are configured to conduct a conversation with the passenger based on the interaction planning.

8. The assistance system (100) of any one of claims 1 to 7, wherein the data received by the one or more processors are image data and/or acoustic data.

9. The assistance system (100) of any one of claims 1 to 8, wherein the assistance system (100) is an Intelligent Personal Assistant.

10. The assistance system (100) of any one of claims 1 to 9, wherein the assistance system (100) is configured for safety monitoring.

11. The assistance system (100) of any one of claims 1 to 10, wherein the one or more processors are configured to perform a proactive interaction with the passenger.

12. A vehicle, including the assistance system (100) of any one of the preceding claims.

13. An assistance method (200) for a vehicle, comprising:
receiving (210) data relating to gestures and/or sound of a passenger of the vehicle;
analyzing (220) the data relating to the gestures and/or sound to determine whether an interaction of the passenger is directed towards the vehicle or another entity; and
performing (230) an interaction planning with the passenger based on the analysis.

14. A computer readable storage medium comprising instructions which, when executed on one or more processors, cause the one or more processors to perform the assistance method (200) of claim 13.
